# EUROPEAN PATENT SPECIFICATION

(11) **EP 1 549 572 B1**
(45) Date of publication and mention of the grant of the patent: **17.03.2010**
(21) Application number: 03797923.4
(22) Date of filing: 19.09.2003
(51) Int. Cl.: G01F 11/06, B67D 7/04, B67D 7/66, B60S 5/00

(54) **SELF CONTAINED LUBRICANT DISPENSER**
AUTONOMER SCHMIERMITTELSPENDER
DISTRIBUTEUR DE LUBRIFIANT AUTONOME

(30) Priority: 20.09.2002 US 412530 P
(43) Date of publication of application: 06.07.2005
(73) Proprietor: Graco Minnesota Inc., Minneapolis, MN 55413 (US)
(72) Inventor: KOCH, D., Christian, Maple Grove, MN 55311 (US); WILSON, Blade, Maple Grove, MN 55311 (US); KING, Mark, New Richmond, WI 54017 (US); NEESE, Thomas, Plymouth, MN 55446 (US)
(74) Representative: Sturt, Clifford Mark
(86) International application number: PCT/US2003/029939
(87) International publication number: WO 2004/026705

(56) References cited:
- DE-U1- 8 705 299
- FR-A- 2 786 477
- US-A- 2 229 844
- US-A- 4 719 991
- US-A- 4 883 202
- US-A- 5 228 594
- US-A- 5 242 271
- US-A- 5 533 648
- US-A- 5 635 625
- US-A- 5 704 767
- US-A- 5 957 329
- US-A- 5 975 162
- US-B2- 6 659 306

## Description

### BACKGROUND ART

While larger vehicle maintenance and service facilities have a number of options for automated metered dispensing of fluids, smaller facilities performing relatively few daily oil changes (e. g. 5) have less choice. In such applications, lubricants may be dispensed by (1) pouring from quart/litre containers; (2) hand pumping from a bulk container; or (3) filling a bucket or other container with the desired quantity of lubricant and then pouring from that container into the vehicle.

US5242271, according to the preamble of claim 1, discloses a device for dispensing oils, antifreeze and other fluids from drums or other bulk containers which has a rotary air motor which powers a gerotor-type pumping element. The pumping element has at least one magnet thereon and an electronics package is provided which counts the number of magnetic pulses which occur during the rotation of the gerotor and converts it over to the quantity of material pumped. A valve controls the flow of air to the air motor which in turn allows an operator to control the dispensing of fluid from the outlet of the pumping element.

FR2786477 discloses a fuel distributor gun which is fitted with one or more integrated displays which indicate the amount of fuel dispensed and the price per litre and the total price. The displays are on the upper face of the body of the gun in front of the handgrip, there dimensions are such that the displays are visible during filling of a vehicles fuel tank.

DE8705299 discloses a device comprising a hydroelectric pump motor, a piston measuring pump, a flow meter, a tube connecting a container with the pump and a dispensing valve.

US4719991 discloses a lubricant distribution system which includes a standard oil storage tank, a pump, a retractable hose reel for discharging the lubricant, and a saddle bracket for mounting the reel to the covered upper surface of the tank. The bracket is configured to facilitate attachment of the reel to a lubricant containing tank in an operative system by connecting to the tank at the ventilation cap fitting of the tank, and to be supported and levelled upon the tank with adjustable feet.

US4883202 discloses an anti-spill apparatus including a liquid recovery system, for use with a liquid pumping system, which recovers and returns to a liquid container, any liquid which is inadvertently emitted by the liquid pumping system. The apparatus contemplates a pump, having a feeder hose received in a liquid containing barrel, for conveying chemicals and the like contained in the barrel, to a remote location and a new mounting system for mounting the pump on the barrel. The recovery system includes a splash guard which encases a portion of the pump, a recovery hose coupled between a downstream portion of the feeder hose and the splash guard, and a drain spout which receives the liquid from the splash guard and conveys it to the liquid container.

### DISCLOSURE OF THE INVENTION

It is therefore an object of this invention to provide a portable integrated oil dispensing unit primarily for use in auto repair shops and low volume service stations where low volume, infrequent fluid dispense is desired. Thus, the invention consists of a dispenser as defined by claim 1.

Towards this end, the integrated design incorporates a dispense valve, a meter, a hose, an AC powered (plug it into a normal wall socket) electric pump, power cord and adjustable fluid suction tube, all packaged in one portable unit.. The unit is capable of dispensing fluids such as standard SAE grade automotive motor oils, automatic transmission fluid (ATF), gear lube, hydraulic oil and engine coolant (antifreeze) The pump motor will shut down at completion of dispense; and emergency shut-off can be provided These and other objects and advantages of the invention will appear more fully from the following description made in conjunction with the accompanying drawings wherein like reference characters refer to the same or similar parts throughout the several views.

### BRIEF DESCRIPTION OF DRAWINGS

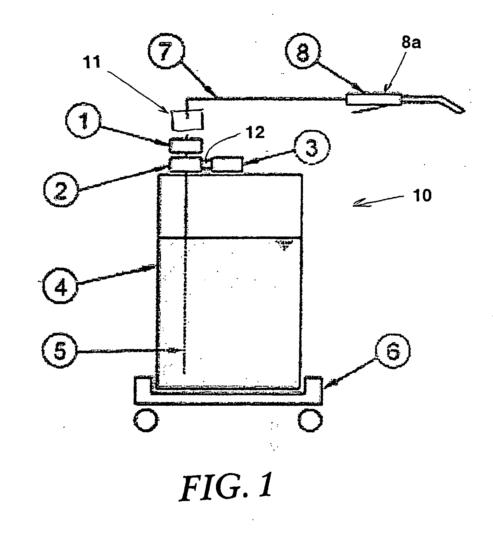

Figure 1 is a schematic view of the lubricant dispenser of the instant invention.

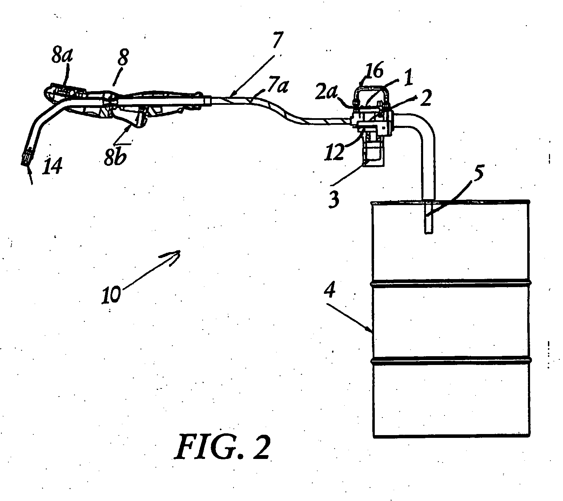

Figure 2 is a view of the lubricant dispenser of the preferred embodiment of the instant invention.

### BEST MODE FOR CARRYING OUT THE INVENTION

The instant invention, generally designated 10, is comprised of a flow meter 1 ion conjunction with a pump 2. In the preferred embodiment, these two elements are combined wherein pump 2 is of the gerotor type and the flow meter 1 is formed by locating a Hall Effect sensor 2a in the gerotor housing so as to count the pulses generated by movement of the gerotor teeth due to fluid flow therethrough.

A DC motor 3 drives pump 2 through a gearbox 12 to reduce the rpm level. In the preferred embodiment, the motor 3 runs at 20,000 RPM and is geared down to around 600 rpm to yield a flow rate of around 6.8 litres (1.5 gallons) per minute. Dispenser 10 is designed for mounting on a bulk fluid container 4 and has a suction tube 5 depending downwardly into container 4. A portable base 6 may be provided.

Dispensing hose 7 leads to dispense valve 8 which has a display 8a thereon to indicate the amount dispensed. Dispense valve 8 is provided with a non-drip nozzle 14 which requires a pressure of about 138 kPa (20 psi) in order to open and provide fluid flow.

Dispense valve 8 also has a trigger 8b which is an electrical switch rather than a mechanical valve and communicates with control 16 either via a wireless link or through one or more wires 7A incorporated into hose 7. A hose reel 11 or hose rack (for winding up hose) is desirably incorporated into the unit 10. Flow meter 1 transmits volume dispense information to display 8a either via a wireless link or through one or more wires 7A incorporated into hose 7.

For operation, all the operator need do is insert suction tube 5 into container 4 and place unit 10 on top of container 4. After plugging in the unit, it is ready to dispense. The unit first has to be primed, that is, by opening the dispense valve 8 until fluid flows from valve 8. At that point, flow meter 1 will read the amount dispensed. The flow meter/display combination and associated control electronics are also capable of performing preset dispense, that is, a desired amount (e.g. 4.7 litres (5 quarts)) is designated by the operator and the unit ceases dispensing when that amount has been dispensed.

It is contemplated that various changes and modifications may be made to the lubricant dispenser without departing from the scope of the invention as defined by the following claims.

## Claims

1. A dispenser (10) for dispensing lubricants and the like from and mounting on a bulk container (4), said dispenser (10) being portable and comprising:
a motor (3);
a pump (2) driven by said motor (3);
a flow meter (1) incorporated into and combined with said pump (2);
a display (8a) for the amount of fluid dispensed, said display (8a) being in communication with said flow meter (1), and
a suction tube (5) depending into said bulk container (4) from said pump (2);
said dispenser (10) **characterised by** further comprising:
a dispense valve (8); and
a dispense hose (7) connecting said pump (2) and said dispense valve (8),
wherein said display (8a) is on said dispense valve (8), and
said dispense valve (8) has a trigger (8a) which is comprised of an electrical switch.

2. The dispenser (10) of claim 1, further comprising:
a hose storage device (11)

3. The dispenser (10) of claim 2,
wherein said hose storage device (11) is a hose reel.

4. The dispenser (10) of any preceding claim,
wherein said dispense valve (8) comprises a valve requiring a predetermined fluid pressure to open.

5. The dispenser (10) of any preceding claim,
wherein said dispense valve (8) communicates with said flow meter (1) through said dispense hose (7).

6. The dispenser (10) of any preceding claim,
wherein said dispense valve (8) communicates with said flow meter (1) through a wireless link.

7. The dispenser (10) of any preceding claim,
wherein said pump (2) is a gerotor.

## Patentansprüche

1. Abgabevorrichtung (10) zum Abgeben von Schmierstoffen und dergleichen aus einem Massengutbehälter (4), und die an einem Massengutbehälter (4) montiert wird, wobei die Abgabevorrichtung (10) tragbar ist und Folgendes umfasst:
einen Motor (3);
eine durch den Motor (3) angetriebene Pumpe (2);
einen Durchflussmesser (1), der in die Pumpe (2) integriert und mit ihr kombiniert ist;
eine Anzeige (8a) für die abgegebene Fluidmenge, wobei die Anzeige (8a) in Kommunikation mit dem Durchflussmesser (1) steht, und
ein Saugrohr (5), das von der Pumpe (2) in den Massengutbehälter (4) hinab reicht;
wobei die Abgabevorrichtung (10) **dadurch gekennzeichnet ist, dass** sie des Weiteren Folgendes umfasst:
ein Abgabeventil (8); und
einen Abgabeschlauch (7), der die Pumpe (2) und das Abgabeventil (8) verbindet,
wobei sich die Anzeige (8a) an dem Abgabeventil (8) befindet, und
wobei das Abgabeventil (8) einen Auslöser (8a) ausweist, der aus einem elektrischen Schalter besteht.

2. Abgabevorrichtung (10) nach Anspruch 1, die des Weiteren Folgendes umfasst:
eine Schlauchaufbewahrungsvorrichtung (11).

3. Abgabevorrichtung (10) nach Anspruch 2,
wobei die Schlauchaufbewahrungsvorrichtung (11) eine Schlauchwinde ist.

4. Abgabevorrichtung (10) nach einem der vorangehenden Ansprüche,
wobei das Abgabeventil (8) ein Ventil umfasst, das zum Öffnen eines vorgegebenen Fluiddrucks bedarf.

5. Abgabevorrichtung (10) nach einem der vorangehenden Ansprüche,
wobei das Abgabeventil (8) über den Abgabeschlauch (7) mit dem Durchflussmesser (1) in Strömungsverbindung steht.

6. Abgabevorrichtung (10) nach einem der vorangehenden Ansprüche,
wobei das Abgabeventil (8) über eine drahtlose Verbindung mit dem Durchflussmesser (1) kommuniziert.

7. Abgabevorrichtung (10) nach einem der vorangehenden Ansprüche, wobei die Pumpe (2) eine Gerotorpumpe ist.

## Revendications

1. Distributeur (10) pour distribuer des lubrifiants et similaire depuis et étant monté sur un conteneur à grande capacité (4) ; ledit distributeur (10) étant portable et comprenant :
un moteur (3) ;
une pompe (2) entraînée par ledit moteur (3) ;
un débitmètre (1) incorporé dans et combiné avec ladite pompe (2) ;
un affichage (8a) de la quantité de fluide distribuée, ledit affichage (8a) étant en communication avec ledit débitmètre (1), et
un tube d'aspiration (5) aboutissant dans ledit conteneur à grande capacité (4) depuis ladite pompe (2) ;
ledit distributeur (10) étant **caractérisé en ce que** il comprend en outre :
une soupape de distribution (8) ; et
un flexible de distribution (7) raccordant ladite pompe (2) et ladite soupape de distribution (8),
dans lequel ledit affichage (8a) est sur ladite soupape de distribution (8), et ladite soupape de distribution (8) comporte un déclencheur (8a) qui est constitué d'un interrupteur électrique.

2. Distributeur (10) selon la revendication 1, comprenant en outré :
un dispositif de stockage de flexible (11).

3. Distributeur (10) selon la revendication 2,
dans lequel ledit dispositif de stockage de flexible (11) est un dévidoir de flexible.

4. Distributeur (10) selon une quelconque des revendications précédentes,
dans lequel ladite soupape de distribution (8) comprend une soupape requérant une pression de fluide déterminée pour s'ouvrir.

5. Distributeur (10) selon une quelconque des revendications précédentes,
dans lequel ladite soupape de distribution (8) communique avec ledit débitmètre (1) par l'intermédiaire dudit flexible de distribution (7).

6. Distributeur (10) selon une quelconque des revendications précédentes,
dans lequel ladite soupape de distribution (8) communique avec ledit débitmètre (1) par l'intermédiaire d'une liaison sans fil.

7. Distributeur (10) selon une quelconque des revendications précédentes,
dans lequel ladite pompe (2) est une gérotor.
